# EUROPÄISCHE PATENTSCHRIFT

(11) **EP 3 649 006 B1**
(45) Veröffentlichungstag und Bekanntmachung des Hinweises auf die Patenterteilung: **22.10.2025**
(21) Anmeldenummer: 18733858.7
(22) Anmeldetag: 25.06.2018
(51) Int. Cl.: B60L 50/50

(54) **LADEBOXEINHEIT FÜR EINE LADESÄEULE**
CHARGING BOX UNIT FOR A CHARGING POST
BOÎTIER DE RECHARGEMENT POUR UNE BORNE DE RECHARGEMENT

(30) Priorität: 06.07.2017 DE 102017115098
(43) Veröffentlichungstag der Anmeldung: 13.05.2020
(73) Patentinhaber: Compleo Charging Solutions GmbH & Co. KG, 58513 Lüdenscheid (DE)
(72) Erfinder: HELNERUS, Stefan, 59821 Arnsberg (DE); MUELLER-WINTERBERG, Christian, 46282 Dorsten (DE); WAFFNER, Jürgen, 45307Essen (DE); DEMBECK, Florian, 45701 Herten (DE)
(74) Vertreter: Gottschald Patentanwälte Partnerschaft mbB
(86) Internationale Anmeldenummer: PCT/EP2018/066859
(87) Internationale Veröffentlichungsnummer: WO 2019/007721

(56) Entgegenhaltungen:
- WO-A1-2011/045635
- DE-A1- 102012 020 641
- DE-A1- 102012 022 963
- DE-A1- 102012 106 484
- US-A1- 2010 013 434
- US-A1- 2011 169 447
- US-A1- 2011 246 014
- US-A1- 2012 135 634
- US-A1- 2013 169 227
- US-A1- 2015 108 947

## Beschreibung

### Gebiet der Erfindung

Der Gegenstand betrifft eine Ladeboxeinheit, umfassend einen Grundkörper, und eine Steckverbindung mit den Merkmalen nach dem Oberbegriff des Anspruchs 1.

### Hintergrund der Erfindung

Ladesäulen sind Ladepunkte, an denen ein Besitzer oder Nutzer eines Elektrofahrzeugs dieses zum Laden netzseitig anschließt. Elektrofahrzeuge werden neben öffentlich zugänglichen Ladepunkten häufig auch von den Besitzern oder Nutzern der Elektrofahrzeuge zu Hause, oder an der Arbeitsstelle geladen. Die Installation derartiger Ladesäulen spielt eine bedeutende Rolle. Denn Ladesäulen stellen große elektrische Leistungen zum Laden von Elektrofahrzeugen bereit. Entsprechend hohe Anforderungen werden an die Sicherheit derartiger Ladesäulen gestellt.

Insbesondere der netzseitige Anschluss einer Ladesäule ist sicherheitskritisch. Die Installation einer Ladesäule ist deswegen zwingend von einem Fachmann durchzuführen und kann nicht von einem Besitzer oder Nutzer eines Elektrofahrzeugs selber durchgeführt werden.

Im Störungsfall, oder sollte ein Defekt an der Ladesäule auftreten, muss auch bei kleinen Fehlern, Problemen oder Defekten stets Fachpersonal bemüht werden, um die Fehlerbeseitigung durchzuführen. Kleine Fehler, Probleme oder Defekte können beispielsweise Bauteile der Ladesäule betreffen, die nicht mit der sicherheitskritischen elektrischen Leistungsversorgung im Zusammenhang stehen. Zum Beispiel zählen hierzu Fehler, Probleme oder Defekte an der Benutzerschnittstelle mittels der ein Besitzer oder Nutzer eines Elektrofahrzeugs beispielsweise einen Ladevorgang regeln oder steuern kann.

Um zu vermeiden, dass für derartige Fehler stets ein Fachmann bemüht werden muss, wurden Ladeboxeinheiten entwickelt, welche als eine Art Modul an der Ladesäule angeordnet werden können. Diese Ladeboxeinheiten umfassen insbesondere Bauteile, die nicht die netzseitige elektrische Leistungsversorgung betreffen, wie etwa Steuerschaltungen, Zähler, Benutzerschnittstellen oder Anschlussbuchsen für Ladekabel.

Die Montage bzw. Demontage derartiger Ladeboxeinheiten kann von einem Besitzer oder Nutzer eines Elektrofahrzeugs selber durchgeführt werden. Auch im Fehler- bzw. Defektfall an der Ladeboxeinheit kann ein Besitzer oder Nutzer eines Elektrofahrzeugs selber die fehlerhafte bzw. defekte Ladeboxeinheit einfach austauschen. Der Einsatz von Fachpersonal ist somit in diesen Fällen nicht mehr notwendig.

### Allgemeine Beschreibung einiger beispielhafter Ausführungsformen der Erfindung

Die Ladesäule ist in der Regel fest an dem Aufstellungsort (z.B. an einer Garagenwand, Parkplätzen oder auf einem Bürgersteig) montiert und der netzseitige Anschluss kann dementsprechend mittels der Ladesäule erfolgen. Die Ladeboxeinheit kann an der fest montierten Ladesäule angeordnet werden. Im Bereich von öffentlich zugänglichen Ladesäulen (z.B. auf Parkplätzen oder Bürgersteigen) kann eine derartige Ladeboxeinheit auch nicht lösbar an der Ladesäule angeordnet sein oder von dieser umfasst sein, insbesondere um die verstärkte Gefahr durch Diebstahl und/oder Vandalismus zu verringern. Beispielsweise um eine Ladeboxeinheit mit der zum Betrieb notwendigen Energie zu versorgen, werden diese mittels eines dedizierten Anschlusses an der Ladesäule angeschlossen. Ein derartiger dedizierter Anschluss ist mitunter nicht zu den Anschlüssen von weiteren Ladeboxeinheiten und/oder Ladesäulen kompatibel. Stand der Technik dazu ist aus der US2012/135634 A1, der US2011/169447 A1, der US2013/169227 A1, der US2015/108947 A1, der WO2011/045635 A1, der US2011/0246014 A1, der US2010/0013434 A1, der DE102012020641 A1, der DE102012022963 A1, der DE102021106484 A1 und der DE102011004734 U1 bekannt.

Vor dem Hintergrund des dargestellten Standes der Technik liegt dem Gegenstand die Aufgabe zugrunde, eine Ladeboxeinheit bereit zu stellen, welche insbesondere einfach mit einer Ladesäule verwendet werden kann.

Die Erfindung ist durch den Anspruch 1 definiert. Die Ladeboxeinheit umfasst eine Steckverbindung zum Anschluss von einer oder mehreren Zuleitungen und/oder Ableitungen, wobei die Steckverbindung an einer nach außen gerichteten Seite eines Grundkörpers der Ladeboxeinheit angeordnet ist, wobei die Steckverbindung zur Verbindung mit einer korrespondierenden Steckverbindung von einer Ladesäule ausgebildet ist.

Die eine oder mehreren Zuleitungen und/oder Ableitungen sind netzseitig vorhanden. Die eine oder mehreren Zuleitungen und/oder Ableitungen sind von einer Ladesäule umfasst.

Die an der Ladeboxeinheit angeordnete Steckverbindung wird mit einer korrespondierenden Steckverbindung der Ladesäule verbunden. Über die Steckverbindung wird die zum Betrieb der Ladeboxeinheit notwendige elektrische Leistung bereitgestellt. Entsprechend kann die Ladeboxeinheit ähnlich einem sogenannten Plug-and-Play Modul einfach an der Ladesäule angeordnet werden. Eine mitunter aufwendige Montage bzw. Installation der Ladeboxeinheit kann entsprechend entfallen.

Eine Ladesäule (auch Ladepunkt genannt) im Sinne des vorliegenden Gegenstandes kann als ein Ladepunkt an demjenigen Ort verstanden werden, an dem ein Besitzer oder Nutzer eines Elektrofahrzeugs das zum Aufladen einer Batterie des Elektrofahrzeugs notwendige Ladekabel netzseitig verbindet (z.B. einsteckt).

Eine Ladeboxeinheit im Sinne des vorliegenden Gegenstandes kann beispielsweise als ein (z.B. austauchbares) Element verstanden werden, welches an einer Ladesäule (z.B. lösbar) anordenbar ist und die erfindungsgemäßen Mittel aufweist. Im Fall eines Defekts muss entsprechend lediglich die Ladeboxeinheit ausgetauscht werden, und insbesondere nicht die Ladesäule. Alternativ kann eine derartige Ladeboxeinheit von einer Ladesäule umfasst sein. Insbesondere kann in diesem Fall die Ladeboxeinheit fest (z.B. unlösbar) an der Ladesäule angeordnet sein. Dies ist insbesondere bei Ladesäulen vorgesehen, die öffentlich zugänglich sind.

Es ist erkannt worden, dass in einem Grundkörper der Ladeboxeinheit die wesentliche Technik zur Steuerung der Ladeboxeinheit und/oder Ladesäule (z.B. Steuerschaltung, Benutzerschnittstelle, Ein-/Ausgabemittel, Sensoren, Prozessor, Speicher, um einige nicht limitierende Beispiele zu nennen) verbaut sein kann. Beispielsweise kann als Eingabemittel eine Tastatur oder dergleichen vorgesehen sein. Als Ausgabemittel kann beispielsweise ein Display oder dergleichen vorgesehen sein, so dass eine Interaktion mit einem Besitzer oder Nutzer eines Elektrofahrzeugs möglich ist. Denkbar ist auch eine kombinierte Eingabe-/Ausgabeschnittstelle, beispielsweise ein berührungsempfindliches Display, welches sowohl Informationen darstellen als auch Eingaben durch den Besitzer oder Nutzer entgegen nehmen kann.

Eine Ladeboxeinheit umfasst folglich die kompletten elektrischen- und Informations- und Kommunikationstechnik (IKT)-Elemente je nach Ausprägung der Ausstattung. Beispielsweise können Ladeboxeinheiten die zum Betrieb der Ladesäule notwendigen Steuerungsmöglichkeiten bereitstellen, und/oder erweiterte Funktionen für eine Steuerung und/oder Regelung der Ladesäule bereitstellen. Auch können beispielsweise Statusinformationen oder dergleichen einem Besitzer oder Nutzer bereitgestellt werden, z. B. mittels einer Anzeigevorrichtung der Ladeboxeinheiten.

Die Ladeboxeinheit umfasst eine rückseitige Steckverbindung (z.B. einen Stecker), über die die Ladeboxeinheit alle notwendigen Zuleitungen und/oder Ableitungen von der Ladesäule erhalten kann. Die Ladesäule umfasst eine zu der Steckverbindung der Ladeboxeinheit korrespondierende Steckverbindung (z.B. eine Buchse). Über die mittels der Steckverbindungen herstellbare Verbindung zwischen der Ladeboxeinheit und der Ladesäule können insbesondere Eingabeinformationen und Ausgabeinformationen ausgetauscht werden. Eingabeinformationen können beispielsweise Steuereingaben des Besitzers oder Nutzers des Elektrofahrzeugs umfassen. Ferner können Eingabeinformationen beispielsweise Ladepräferenzen des Besitzers oder Nutzers des Elektrofahrzeugs repräsentieren. Eingabeinformationen können beispielsweise mittels einer Benutzerschnittstelle seitens eines Besitzers oder Nutzers eines Elektrofahrzeugs eingegeben werden und entsprechend erfasst werden. Ausgabeinformationen können beispielsweise Informationen hinsichtlich eines Ladevorgangs, und/oder Abfrageinformationen zur Regelung oder Steuerung eines Ladevorgangs umfassen. Ausgabeinformationen können beispielsweise mittels einer von der Ladeboxeinheit umfassten Anzeigevorrichtung ausgegeben werden.

Die Ladeboxeinheit kann in einer beispielhaften Ausgestaltung lösbar mit der Ladesäule verbindbar sein, so dass die Ladeboxeinheit an der Ladesäule anordenbar ist. Die Ladesäule ist insbesondere fest (z.B. unbeweglich) angeordnet. Die Ladesäule kann beispielsweise in einer Garage oder an einer Garagenwand angeordnet sein. Indem die Ladeboxeinheit lösbar mit der Ladesäule verbindbar ist, ist die Ladeboxeinheit insbesondere austauschbar. Wenn beispielsweise ein Defekt an einem Mittel der Ladeboxeinheit (z.B. an der Anzeigevorrichtung) auftritt, braucht folglich nur die Ladeboxeinheit umfassend das defekte Mittel ausgetauscht zu werden, und nicht die gesamte Ladesäule.

Die Ladeboxeinheit kann beispielsweise ein den Grundkörper der Ladeboxeinheit zumindest teilweise umschließendes Gehäuse umfassen. Ferner kann die Ladeboxeinheit beispielsweise eine Steuerschaltung zur Steuerung von Ladefunktionen der Ladesäule umfassen. Die Steuerschaltung ist beispielsweise in dem Grundkörper angeordnet und von dem Gehäuse umschlossen.

Die Steckverbindung der Ladeboxeinheit ist an einer nach außen gerichteten Seite (z.B. Rückseite) des Grundkörpers angeordnet. Die Steckverbindung ist beispielsweise standardisiert, z.B. in ihrer äußeren Formgebung standardisiert. Ferner kann die Anordnung von von der Steckverbindung umfassten Kontakten bzw. Kontaktstiften und/oder Kontaktbuchsen standardisiert sein. Dies eröffnet die Möglichkeit von Weiterentwicklungen von gegenständlichen Ladeboxeinheiten, um diese an einer vorhandenen Ladesäule weiterhin anzuordnen zu können. Die von der Steckverbindung umfassten Kontakte können beispielsweise je nach Anforderung unterschiedlich belegt sein, jedoch in ihrer äußeren Form standardisiert sein.

Gemäß einem Ausführungsbeispiel wird vorgeschlagen, dass über die Steckverbindung zwischen der Ladeboxeinheit und der Ladesäule eine Kommunikation zwischen der Ladeboxeinheit und der Ladesäule erfolgt.

Es wird ferner vorgeschlagen, dass die Steckverbindung auf einer Rückseite des Grundkörpers (im aufgenommenen (z.B. montierten) Zustand der der Ladesäule zugewandten Seite) angeordnet ist, wobei die Steckverbindung formschlüssig in die korrespondierende Steckverbindung der Ladesäule aufnehmbar ist. Die Steckverbindung der Ladeboxeinheit kann beispielsweise eine umlaufende Ausbuchtung aufweisen, die in eine korrespondierende Einbuchtung, welche die Steckverbindung der Ladesäule umgibt, eingreift.

Ein Ausführungsbeispiel sieht vor, dass die Ladeboxeinheit in einer die korrespondierende Steckverbindung aufweisende Aufnahme der Ladesäule aufnehmbar ist. Die Aufnahme kann beispielsweise eine Vertiefung sein, welche derart ausgestaltet ist, dass die Ladeboxeinheit zumindest teilweise in der Vertiefung aufnehmbar ist.

Im Sinne des Gegenstandes bezeichnet der Ausdruck "im aufgenommenen Zustand", dass die Ladeboxeinheit in der Aufnahme der Ladesäule aufgenommen ist und die Steckverbindung zwischen der Ladeboxeinheit und der Ladesäule hergestellt ist.

Gemäß einem Ausführungsbeispiel wird vorgeschlagen, dass die Ausbuchtung der Ladeboxeinheit gegenüber der korrespondierenden Aufnahme der Ladesäule abgedichtet ist, wenn die Ladeboxeinheit in der Aufnahme der Ladesäule aufgenommen ist.

Im aufgenommenen Zustand ist durch die Abdichtung kein Kontakt zu spannungsführenden Teilen möglich. Beispielsweise ist ein Nutzer der Ladesäule umfassend die Ladeboxeinheit nicht in Gefahr, mit derartigen spannungsführenden Teilen in Berührung zu kommen. Dies gewährleistet die Erfüllung von Sicherheitsanforderungen, welchen Ladesäulen und somit auch an diesen anordenbare Ladeboxeinheiten unterliegen. Zur Abdichtung kann beispielsweise eine Dichtung an der innenliegenden Kante der Ausbuchtung anordnet sein. Zusätzlich oder alternativ kann eine derartige an der innenliegende Kante angeordnete Dichtung an der Aufnahme der Ladesäule angeordnet sein. Die Dichtung kann beispielsweise eine Lippendichtung, beispielsweise aus einem flexiblen und/oder elastischen Material, wie etwa Gummi sein.

Es wird ferner vorgeschlagen, dass die Ladeboxeinheit ein Fixierelement umfasst, so dass die Ladeboxeinheit im aufgenommenen Zustand an der Ladesäule fixiert ist. Mittels des Fixierelements kann beispielsweise eine Fixierung bzw. Arretierung der Ladeboxeinheit im aufgenommenen Zustand an der Ladesäule erfolgen. Das Fixierelement kann beispielsweise eine die Steckverbindung der Ladeboxeinheit umlaufende Ausbuchtung sein, die beispielsweise der Grundkörper aufweist (z.B. an der Rückseite des Grundkörpers). Die Ausbuchtung kann beispielsweise im aufgenommenen Zustand in eine korrespondierende Einbuchtung (z.B. von der Aufnahme der Ladesäule umfasst) eingreifen. Alternativ oder zusätzlich kann das Fixierelement beispielsweise von dem Gehäuse der Ladeboxeinheit umfasst sein. Beispielsweise kann das Fixierelement an einer der Seitenflächen des Gehäuses von der Ladeboxeinheit angeordnet sein.

Als Fixierelemente können ferner beispielsweise Einrastelemente, wie etwa Klipse verwendet werden. Diese können beispielsweise in entsprechende Gegenstücke einrasten und die Ladeboxeinheit an der Ladesäule fixieren. Denkbar sind des Weiteren auch händisch zu betätigende Fixierelemente, wie etwa eine Fixierung mittels einer Schraube oder eines Klemmelementes. Das Fixierelement stellt sicher, dass die Ladeboxeinheit im aufgenommenen Zustand in der Aufnahme der Ladesäule fixiert bzw. arretiert ist. Ein derartiges Fixierelement kann beispielsweise an der Rückseite des Grundkörpers angeordnet sein. Alternativ oder zusätzlich kann das Fixierelement an dem den Grundkörper zumindest teilweise umschließenden Gehäuse angeordnet sein. Insbesondere kann das Fixierelement an einer Seitenfläche des Gehäuses vorgesehen sein. In einem Ausführungsbeispiel umschließt die Aufnahme der Ladesäule im aufgenommenen Zustand zumindest teilweise die Seitenfläche des Gehäuses von der Ladeboxeinheit. Es können mehrere Fixierelemente von der Ladeboxeinheit umfasst sein.

Gemäß einem Ausführungsbeispiel wird vorgeschlagen, dass die Steckverbindung einen oder mehrere Kontakte aufweist, wobei über mindestens einen der Kontakte eine elektrische Leistung und über mindestens einen weiteren der Kontakte Informationen übertragbar sind.

Als Informationen können beispielsweise zwischen der Ladeboxeinheit und der Ladesäule Steuersignale übertragen werden. Auf Basis der Steuersignale kann beispielsweise ein Ladevorgang einer Batterie eines Elektrofahrzeugs geregelt bzw. gesteuert werden. Die Steuersignale können beispielsweise von einer von dem Grundkörper der Ladeboxeinheit umfassten Steuerschaltung (z.B. ein Prozessor mit Speicher) generiert werden. Die Steuersignale können beispielsweise auf Basis von von einem Besitzer oder Nutzer eines Elektrofahrzeugs eingegebenen Informationen generiert werden. Zusätzlich oder alternativ können die Steuersignale zumindest teilweise automatisch generiert werden, beispielsweise auf Basis von von einem oder mehreren Sensoren erfassten Informationen. Diese Sensoren können beispielsweise von der Ladeboxeinheit umfasst sein. Beispielsweise können die Sensoren mit der Steuerschaltung verbunden sein, so dass von den Sensoren erfasste Informationen von der Steuerschaltung verarbeitet werden und ein korrespondierendes Steuersignal generierbar ist. Zusätzlich oder alternativ können beispielsweise Statusinformationen von der Ladesäule an die Ladeboxeinheit übertragen werden. Statusinformationen sind beispielsweise indikativ für einen Ladevorgang betreffende Informationen. Beispielsweise können eine oder mehrere Statusinformationen auf von einer Anzeigevorrichtung der Ladeboxeinheit wiedergegeben werden.

Es wird ferner vorgeschlagen, dass über die einen oder mehreren Kontakte die folgenden Parameter übertragbar sind:
(i) elektrische Wechselspannung;
(ii) elektrische Gleichspannung;
(iii) elektrische Niederspannung;
(iv) Daten;
(v) oder eine Kombination hiervon.

Elektrische Wechselspannung, sowie elektrische Gleichspannung werden insbesondere zur Ladung von Batterien von Elektrofahrzeugen verwendet. Beispielsweise kann die Ladeboxeinheit eine weitere Steckverbindung umfassen, mittels der ein Elektrofahrzeug bzw. die Batterie eines Elektrofahrzeugs mit dieser weiteren Steckverbindung (z.B. über ein Ladekabel) verbindbar ist. Ist eine derartige Steckverbindung zum Laden eines Elektrofahrzeugs von der Ladeboxeinheit umfasst, können beispielsweise Elektrofahrzeuge, die unterschiedliche Stecker bzw. Buchsen zum Anschluss des Ladekabels benötigen, an ein und derselben Ladesäule angeschlossen werden. Es muss lediglich die Ladeboxeinheit gewechselt werden. Ein Wechsel der Ladeboxeinheit umfassend eine Steckverbindung zum Anschluss eines Ladekabels für ein Elektrofahrzeug kann beispielsweise auch erforderlich sein, wenn sich ein Nutzer der Ladesäule ein neues oder weiteres Elektrofahrzeug angeschafft hat, und dieses ebenfalls mittels der bereits vorhandenen Ladesäule geladen werden soll.

Mittels der elektrischen Niederspannung kann beispielsweise die notwendige elektrische Energie zum Betrieb der Ladeboxeinheit bereitgestellt werden.

Das Übertragen von Daten ermöglicht beispielsweise einen Informationsaustausch zwischen der Ladeboxeinheit und der Ladesäule. Beispielsweise können Steuersignale als Daten im Rahmen einer Kommunikation zwischen Ladeboxeinheit und Ladesäule übertragen werden. Ferner können beispielsweise Statusinformationen zwischen Ladeboxeinheit und Ladesäule ausgetauscht werden.

Gemäß einem Ausführungsbeispiel wird vorgeschlagen, dass mindestens einer der Kontakte, über den eine elektrische Leistung übertragbar ist, eine oder mehrere der folgenden Zuleitungen umfasst:
(i) 1-phasige Wechselspannungszuleitung;
(ii) 3-phasige Wechselspannungszuleitung;
(iii) Gleichspannungszuleitung;
(iv) oder eine Kombination hiervon.

Mittels einer oder mehrerer der Zuleitungen ist zwischen der Ladeboxeinheit und der Ladesäule insbesondere eine Wechselspannung (z.B. AC 3kW 1-phasig, AC 22kW 3-phasig) oder eine Gleichspannung (z.B. DC 50 kW) übertragbar.

Die 1-phasige Wechselspannungszuleitung kann beispielsweise bei sogenannten Heimladeboxen, die beispielsweise an Ladesäulen am Wohnort oder an der Arbeitsstelle eines Besitzers oder Nutzers eines Elektrofahrzeugs anordenbar sind, verwendet werden. Beispielsweise kann mittels der 1-phasigen Wechselspannungszuleitung 2 kW bis 5 kW, bevorzugt 3 kW bis 4 kW elektrische Leistung bereitgestellt werden.

Die 3-phasige Wechselspannungszuleitung kann beispielsweise bei Ladesäulen mit Ladeboxeinheiten an Orten eingesetzt werden, an denen ein 3-phasiger elektrischer Anschluss vorhanden ist. Oftmals sind derartige Anschlüsse auch im Heimbereich anzutreffen. An Orten, an denen üblicherweise Elektrofahrzeuge geparkt werden, muss mitunter ein derartiger Anschluss dediziert installiert werden. Beispielsweise kann mittels der 3-phasigen Wechselspannungszuleitung 20 kW bis 25 kW, 21 kW bis 24 kW, bevorzugt 22 kW bis 23 kW elektrische Leistung bereitgestellt werden.

Die Gleichspannungszuleitung kann beispielsweise zum Laden eines Elektrofahrzeugs mit großen elektrischen Leistungen (z.B. DC 50 kW) eingesetzt werden.

Die Ladeboxeinheit kann ferner einen Wechselspannungs-Gleichspannungs-Tiefsetzsteller (AC/DC Tiefsetzsteller) umfassen. Dieser kann beispielsweise in dem Grundkörper der Ladeboxeinheit angeordnet sein. Mittels des AC/DC Tiefsetzstellers kann beispielsweise die von einer Wechselspannungszuleitung zugeführte elektrische Leistung in eine niedrige Gleichspannung umgewandelt werden. Diese niedrige Gleichspannung ist beispielsweise zur Speisung der elektronischen Komponenten der Ladeboxeinheit verwendbar, wie etwa Steuerschaltung (z.B. Prozessor und Speicher), Benutzerschnittstelle, Anzeigevorrichtung oder dergleichen um einige nicht limitierende Beispiele zu nennen.

Dies eröffnet ferner die Möglichkeit für einen Besitzer oder Nutzer eines Elektrofahrzeugs, die zum Laden des Elektrofahrzeugs verwendete Ladesäule beispielsweise zunächst mit einer Ladeboxeinheit auszustatten, mittels der eine 1-phasige Wechselspannungszuleitung zum Laden des Elektrofahrzeugs nutzbar ist. Sollte der Besitzer oder Nutzer des Elektrofahrzeugs wünschen, beispielsweise sein Elektrofahrzeug schneller zu laden, kann beispielsweise der Besitzer oder Nutzer des Elektrofahrzeugs eine andere Ladeboxeinheit verwenden und entsprechend an der Ladesäule anordnen, mittels der beispielsweise eine 3-phasige Wechselspannungszuleitung zum Laden des Elektrofahrzeugs nutzbar ist, sofern dies von der Ladesäule bereitstellbar ist.

In einer beispielhaften Ausführungsform ist die Steckverbindung spannungsfrei, wenn die Ladeboxeinheit nicht in der Aufnahme der Ladesäule aufgenommen ist. Somit wird erst elektrische Leistung über die Steckverbindung übertragen, wenn die Ladeboxeinheit an der Ladesäule angeordnet ist. Um ein zumindest teilautomatisches Zuschalten einer elektrischen Leistung zu ermöglichen, kann beispielsweise ein Taster oder dergleichen von der Steckverbindung umfasst sein. Der Taster wird beispielsweise betätigt, wenn die Ladeboxeinheit in der Aufnahme der Ladesäule aufgenommen ist. Der Taster kann beispielsweise ein Schalter sein, mittels dem beispielsweise der Stromfluss von einer Zuleitung der Ladesäule zur Ladeboxeinheit an- bzw. abschaltbar ist.

Die Steckverbindung kann beispielsweise eine oder mehrere Ableitungen von der Ladeboxeinheit zu der Ladesäule umfassen. Diese eine oder mehrere Ableitungen können beispielsweise zum Übertragen von Informationen, z.B. für eine Kommunikation zwischen der Ladeboxeinheit und der Ladesäule eingesetzt werden. Die zur Kommunikation verwendete Leitung kann ferner zusätzlich als Zuleitung, ausgebildet sein. Mittels einer kombinierten Zu- und Ableitung kann eine bidirektionale Kommunikation zwischen Ladeboxeinheit und Ladesäule stattfinden. In einer beispielhaften Ausgestaltung ist eine Zuleitung der Steckverbindung, welche zur Übertragung einer elektrischen Leistung (z.B. mittels Wechselspannung oder Gleichspannung) vorgesehen ist, simultan zur Übertragung von Informationen einsetzbar. Hierzu kann beispielsweise die elektrische Leistung mit einem Kommunikationssignal überlagert werden, z.B. mittels einer entsprechenden Modulation des Kommunikationssignals.

In einem Ausführungsbeispiel umfasst die Ladeboxeinheit einen Anschluss zum Anschließen eines Ladekabels, wobei elektrische Leistung über die Steckverbindung an dem Anschluss bereitstellbar ist. Beispielsweise ist als elektrische Leistung elektrische Wechselspannung, elektrische Gleichspannung, sowie elektrische Niederspannung bereitstellbar. Elektrische Wechselspannung ist beispielsweise über die 1-phasige Wechselspannungszuleitung oder die 3-phasige Wechselspannungszuleitung bereitstellbar. Elektrische Gleichspannung ist beispielsweise über die Gleichspannungszuleitung bereitstellbar.

Es wird ferner vorgeschlagen, dass die Steckverbindung schwimmend gelagert ist, so dass bei (z.B. kleineren) Bewegungen in einem in der Ladesäule aufgenommenen Zustand die Steckverbindung der Ladeboxeinheit mit der Steckverbindung der Ladesäule verbunden ist. Dabei ist die Steckverbindung in Bezug auf die von der ebenen Fläche des Grundkörpers ausgebildete Ebene, in der die Steckverbindung angeordnet ist, in Richtung von zwei Freiheitsgraden beweglich. Die Steckverbindung ist beispielsweise schwimmend gegenüber dem Grundkörper gelagert. Beispielsweise entspricht eine kleinere Bewegung im Sinne des Gegenstandes eine Relativbewegung in Richtung von zwei Freiheitsgraden in Längs- und/oder Quererstreckungsrichtung der Steckverbindung (z.B. Stecker) der Ladeboxeinheit gegenüber der Steckverbindung (z.B. Buchse) der Ladesäule, wobei die Relativbewegung kleiner ist als die Länge und/oder Breite der Steckverbindung der Ladeboxeinheit.

Weiterhin ist eine Diebstahlschutzsicherung vorgesehen**,** so dass eine in der Aufnahme der Ladesäule aufgenommene Ladeboxeinheit von außen nicht mehr lösbar ist. Dies ist insbesondere bei der Anordnung von Ladeboxeinheiten an Ladesäulen empfehlenswert, die öffentlich zugänglich sind.

Es wird ferner vorgeschlagen, dass die Diebstahlschutzsicherung ein Einrastelement aufweist, welches von einer Innenseite der Ladesäule aus zugänglich ist und bei Betätigung ein Lösen der Ladeboxeinheit aus der Ausnahme der Ladesäule heraus ermöglicht.

Die Diebstahlschutzsicherung bewirkt beispielsweise, dass dem Anordnen der Ladeboxeinheit an der Ladesäule die Ladeboxeinheit von außen nicht mehr lösbar ist. Ein simples Abziehen von außen der Ladeboxeinheit von der Ladesäule ist somit nicht mehr möglich. Um einen Austausch einer in der Aufnahme der Ladesäule aufgenommen Ladeboxeinheit zu ermöglichen, kann beispielsweise die Diebstahlschutzsicherung, wie vorstehend erläutert, entriegelbar sein. Beispielsweise kann dies mittels eines geeigneten Adapters oder dergleichen durchgeführt werden, welcher beispielsweise in eine zur Entriegelung der Diebstahlschutzsicherung vorgesehene Öffnung eingreift. Zusätzlich oder alternativ kann beispielsweise die Ladesäule bzw. das Gehäuse der Ladesäule öffenbar sein, z.B. mittels einer Revisionsöffnung oder dergleichen. Beispielsweise kann die Diebstahlschutzsicherung derart von innen von der Ladesäule aus, z. B. händisch, entriegelbar sein.

Gemäß einem Ausführungsbeispiel wird vorgeschlagen, dass die Ladeboxeinheit im aufgenommenen Zustand mittels der Steckverbindung an der Ladesäule fixierbar ist.

Alternativ ist die Ladeboxeinheit im aufgenommenen Zustand mittels der Steckverbindung an der Ladesäule fixiert. Hierzu kann die Steckverbindung (z.B. seitens der Ladeboxeinheit und/oder seitens der Ladesäule) ein Einrastelement aufweisen (z.B. ein Klemmelement, ein hakenartiges Element oder dergleichen). Das Einrastelement rastet in ein entsprechend ausgebildetes Gegenstück beim Verbinden der Steckverbindung durch eine Aufnahme der Ladeboxeinheit in die Aufnahme der Ladesäule ein, so dass die Ladeboxeinheit an der Ladesäule mittels der Steckverbindung fixierbar bzw. fixiert ist.

Die Aufgabe wird ferner durch eine Ladesäule gelöst, die Ladesäule umfassend zumindest eine gegenständliche Ladeboxeinheit.

Nachfolgend wird der Gegenstand anhand einer Ausführungsbeispiele zeigenden Zeichnung näher erläutert. In der Zeichnung zeigen:
- Fig. 1: eine Ansicht einer Ladeboxeinheit und einer Ladesäule nach einem Ausführungsbeispiel;
- Fig. 2a: eine Ansicht einer Ladeboxeinheit nach einem Ausführungsbeispiel;
- Fig. 2b: eine vergrößerte Ansicht des Steckers der Ladeboxeinheit gemäß Fig. 2a nach einem Ausführungsbeispiel;
- Fig. 3: eine Rückansicht einer Ladeboxeinheit mi einem Grundkörper und mit einem Gehäuse nach einem Ausführungsbeispiel; und
- Fig. 4: eine schematische Ansicht eines Grundkörpers mit einem Gehäuse von einer Ladeboxeinheit nach einem Ausführungsbeispiel.

### Detaillierte Beschreibung einiger beispielhafter Ausführungsformen der Erfindung

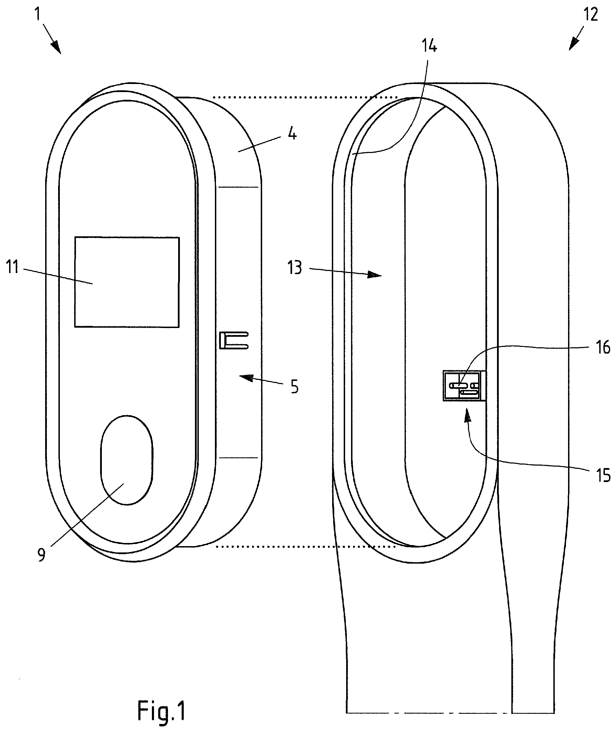

Fig. 1 zeigt eine schematische Ansicht von einer Ladeboxeinheit und einer Ladesäule nach einem Ausführungsbeispiel.

Die Ladeboxeinheit 1 umfasst einen Grundkörper 2, und eine Steckverbindung 7 (in Fig. 1 nicht sichtbar), vorliegend einen Stecker 7, zum Anschluss von ein oder mehreren netzseitigen Zuleitungen und/oder Ableitungen. Die Steckverbindung 7 ist an einer nach außen gerichteten Seite des Grundkörpers 2 (in Fig. 1 nicht sichtbar) angeordnet. Die Steckverbindung 7 ist zur Verbindung mit einer korrespondierenden Steckverbindung 15, vorliegend eine Buchse 15, von einer Ladesäule 12 ausgebildet.

Die Ladeboxeinheit 1 ist in einer entsprechend der Rückseite der Ladeboxeinheit 1 bzw. der rückseitigen Form (z.B. zumindest teilweise umfassend die Seitenfläche 5 des Gehäuses 4 und der die Rückwand bildende Grundkörper 2) der Ladeboxeinheit 1 ausgebildete Aufnahme 13 der Ladesäule 12 anordenbar. Diese Möglichkeit ist durch die beiden gestrichelten Linien zwischen der Ladeboxeinheit 1 und der Ladesäule 12 in Fig. 1 schematisch gekennzeichnet. Dabei kann die Ladeboxeinheit 1 zumindest teilweise in der Aufnahme 13 der Ladesäule 12 aufgenommen werden. Die Form der von der Aufnahme 13 der Ladesäule 12 ausgebildeten Vertiefung entspricht im Wesentlichen der Form der Ladeboxeinheit 1, so dass der Grundkörper 2 und das Gehäuse 4 der Ladeboxeinheit 1 formschlüssig in der Aufnahme 13 aufnehmbar sind. Im aufgenommenen Zustand der Ladeboxeinheit 1 in der Aufnahme 13 der Ladesäule 12 ist insbesondere die Seitenfläche 5 des Gehäuses 4 der Ladeboxeinheit 1 von der Aufnahme 13 zumindest teilweise umschlossen.

Die Aufnahme 13 der Ladesäule 12 umfasst die zum Stecker 7 der Ladeboxeinheit 1 korrespondierende Steckverbindung, Buchse 15. Der Stecker 7 der Ladeboxeinheit 1 ist mit der Buchse 15 der Ladesäule 12 verbindbar.

Die Aufnahme 13 umfasst eine Dichtung 14. Die Dichtung 14 ist vorliegend eine Lippendichtung, welche am innenliegenden und zur Öffnung der Aufnahme 13 gerichteten Rand der Aufnahme 13 angeordnet ist. Alternativ oder zusätzlich kann die Dichtung 14 beispielsweise an der Seitenfläche 5 der Ladeboxeinheit 1 angeordnet sein. Beispielsweise ist die Dichtung 14 entlang des Gehäuses die Seitenfläche 5 umlaufend angeordnet. Die Dichtung 14 bewirkt, dass die Ladeboxeinheit 1 gegenüber der Ladesäule im aufgenommenen Zustand abgedichtet ist. Die Dichtung 14 verhindert das Eindringen von Schmutz (z.B. Staub, Dreck oder dergleichen).

Auf der Vorderseite umfasst die Ladeboxeinheit 1 eine Anschluss 9 für ein Ladekabel eines Elektrofahrzeugs. Ist ein Elektrofahrzeugs mittels eines Ladekabels mit dem Anschluss 9 verbunden, kann über diesen Anschluss 9 elektrische Leistung, welche netzseitig über die Ladesäule 12 und die zwischen der Ladeboxeinheit 1 und der Ladesäule 12 bestehende Steckverbindung (vorliegend bestehend aus dem Stecker 7 und der Buchse 15) bereitgestellt werden. Entsprechend kann beispielsweise eine Batterie eines Elektrofahrzeugs geladen werden. Alternativ kann das Elektrofahrzeug über ein Ladekabel direkt mit der Ladesäule 12 verbunden sein. In diesem Fall weist die Ladesäule 12 einen entsprechenden Anschluss für das Ladekabel auf.

Die Ladeboxeinheit 1 umfasst eine Anzeigevorrichtung 11. Die Anzeigevorrichtung 11 kann als berührungsempfindliches Display ausgebildet sein, so dass Eingaben eines Benutzers oder Besitzers eines Elektrofahrzeugs erfassbar sind. Vorliegend umfasst die Anzeigevorrichtung 11 eine Benutzerschnittstelle. Zusätzlich oder alternativ kann die Ladeboxeinheit 1 eine dedizierte Benutzerschnittstelle zur Erfassung von Benutzereingaben umfassen.

Mittels der Benutzerschnittstelle können beispielsweise Eingaben eines Besitzers oder Nutzers eines Elektrofahrzeugs erfasst werden. Beispielsweise kann der Besitzer oder Nutzer über eine entsprechende Eingabe in die Benutzerschnittstelle einen Ladevorgang eines mit der Ladesäule 1 verbundenen Elektrofahrzeugs starten und/oder stoppen.

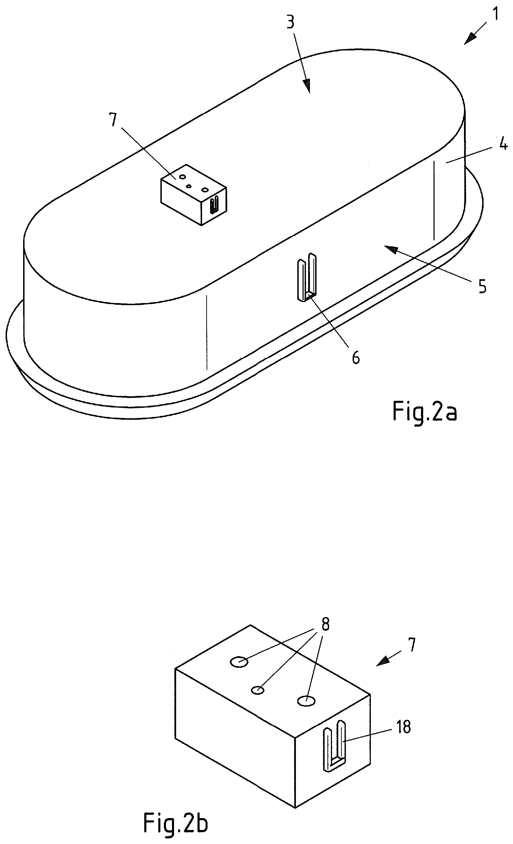

Fig. 2a zeigt eine perspektivische Ansicht einer Ladeboxeinheit nach einem Ausführungsbeispiel.

Von der Rückseite 3 des Grundkörpers 2 der Ladeboxeinheit 1 ragt eine als Stecker 7 ausgebildete Steckverbindung hervor. Der Stecker 7 kann in eine korrespondierende Buchse 15 einer Ladesäule 12 eingreifen, so dass über die dann hergestellte Verbindung beispielsweise eine Kommunikation zwischen der Ladeboxeinheit und der Ladesäule, und/oder elektrische Leistung von einem netzseitigen Anschluss der Ladesäule 12 über die Steckverbindung zwischen Ladeboxeinheit 1 und Ladesäule 12 übertragbar ist.

An der Seitenfläche 5 des Gehäuses 4 weist die Ladeboxeinheit 1 zumindest ein Fixierelement 6, beispielsweise eine Rastnase, auf. Das Fixierelement ist derart ausgebildet, dass im aufgenommenen Zustand der Ladeboxeinheit 1 in einer Aufnahme 13 einer Ladesäule 1 die Ladeboxeinheit 1 fixiert ist. Entsprechend kann ohne ein Lösen des Fixierelementes 6 die Ladeboxeinheit 1 nicht aus der Aufnahme 13 der Ladesäule 1 gelöst werden. Beispielsweise kann auf der der Seitenfläche mit dem Fixierelement 6 gegenüberliegenden Seitenfläche der Ladeboxeinheit 1 ein weiteres Fixierelement 6 angeordnet sein. Das Verwenden eines weiteren Fixierelementes 6 kann die Fixierung der Ladeboxeinheit 1 an der Ladesäule 12 im aufgenommenen Zustand verstärken.

Fig. 2b zeigt eine vergrößerte Ansicht des Steckers der Ladeboxeinheit gemäß Fig. 2a nach einem Ausführungsbeispiel.

Der Stecker 7 umfasst einen oder mehrere Kontakte, die beispielsweise als Kontaktstifte, oder alternativ als Kontaktbuchsen 8 ausgebildet sein können. Beispielsweise kann über mindestens einen der Kontakte eine elektrische Leistung übertragen werden. Zusätzlich oder alternativ können über mindestens einen (weiteren) der Kontakte Informationen übertragen werden. Mittels des Übertragens der Informationen kann beispielsweise eine Kommunikation zwischen der Ladeboxeinheit 1 und der Ladesäule 12 stattfinden. Beispielsweise kann die Kommunikation Steuersignale umfassen. Ein oder mehrere Steuersignale können beispielsweise von einer Steuerschaltung generiert werden, z.B. basierend auf von mittels Benutzereingaben erfassten Informationen.

Der Stecker 7 weist an zumindest einer der Seitenflächen ein Einrastelement 18 auf. Das Einrastelement 18 kann beispielsweise in ein korrespondierendes Gegenstück, welches beispielweise von der Buchse 15 der Ladesäule 1 umfasst ist, eingreifen. Das Einrastelement 18 ermöglicht beispielsweise ein Fixieren der Ladeboxeinheit 1 an der Ladesäule 12 über die zwischen der Ladeboxeinheit 1 und der Ladesäule 12 herstellbare Steckverbindung.

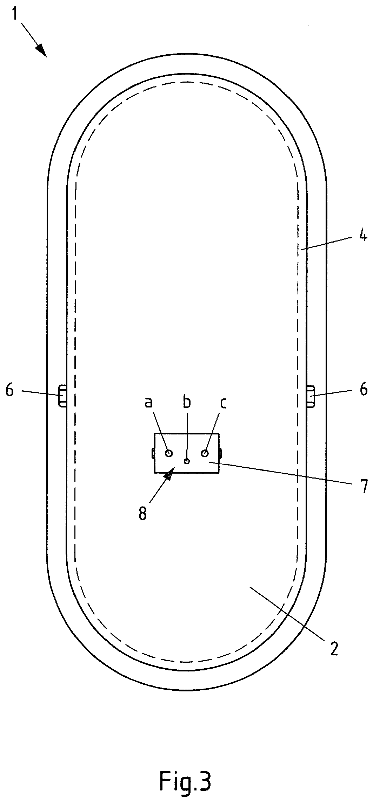

Fig. 3 zeigt eine Rückansicht einer Ladeboxeinheit mit einem Grundkörper und einem Gehäuse nach einem Ausführungsbeispiel.

An dem Grundkörper 2 ist der Stecker 7 angeordnet, welcher von dem Grundkörper hervor ragt.

Die Ladeboxeinheit 1 umfasst ein den Grundkörper 2 zumindest teilweise umschließendes Gehäuse 4. In der den Grundkörper 2 umlaufenden Seitenfläche 5 des Gehäuses können ein oder mehrere Fixierelemente 6 angeordnet sein. Die Fixierelemente 6 können beispielsweise im unteren Drittel der Seitenfläche 5 des Gehäuses 4, welches zur Rückseite der Ladeboxeinheit 1 hin orientiert ist. In diesem unteren Drittelstellt sicher, dass eine Ladeboxeinheit 1, die in einer Aufnahme der Ladesäule 12 aufgenommen ist, verdrehsicher gehalten wird und gegen ein unbeabsichtigtes Herausziehen gesichert ist.

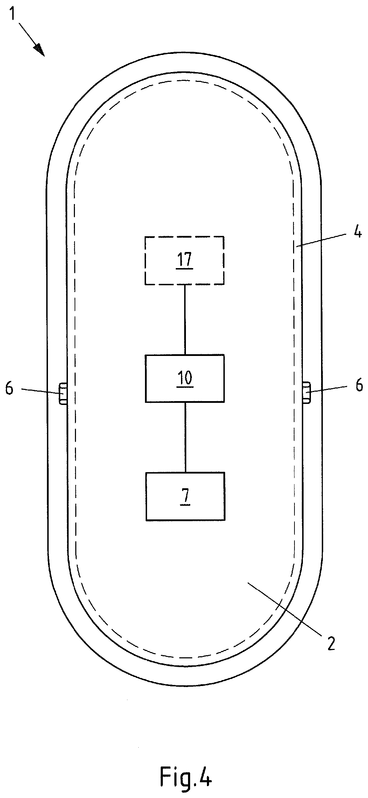

Der Stecker 7 umfasst vorliegend drei Kontaktbuchsen 8, die mit den Bezugszeichen 8a, 8b, 8c gekennzeichnet sind. In diese Kontaktbuchsen 8 können Kontaktstifte 16 (z.B. der Buchse 15 nach Fig. 1) eingreifen. Über diese Kontaktbuchsen 8a bis 8c können beispielsweise Zu- und/oder Ableitungen von bzw. zu der Ladesäule 1 über den Stecker 7 mit der Ladeboxeinheit 1 verbunden werden. Beispielsweise umfasst der Stecker 7 eine oder mehrere Verbindungsleitungen zu einer Steuerschaltung 10, wie beispielsweise in Fig. 4 schematisch dargestellt ist.

Fig. 4 zeigt eine schematische Rückansicht eines Grundkörpers mit einem Gehäuse von einer Ladeboxeinheit nach einem Ausführungsbeispiel.

In dem Grundkörper 2 der Ladeboxeinheit 1 ist vorliegend ein Stecker 7, eine Steuerschaltung 10, sowie eine mit einer Anzeigevorrichtung (z.B. Anzeigevorrichtung 11 nach Fig. 1) verbundene Benutzerschnittstelle 17 dargestellt. Die Benutzerschnittstelle 17 ist optional, da die Benutzerschnittstelle beispielsweise von einer Anzeigevorrichtung umfasst sein kann, oder nicht zwingend erforderlich ist. Z. B. könnte eine Benutzerschnittstelle auch über eine mit der Ladesäule verbundene Benutzerschnittstelle erfolgen. Ein Beispiel von einer Anzeigevorrichtung mit einer von dieser umfassten Benutzerschnittstelle ist beispielsweise ein berührungsempfindliches Display.

Mittels der Benutzerschnittstelle 17 sind beispielsweise Eingaben eines Besitzers oder Nutzers eines Elektrofahrzeugs erfassbar. Beispielsweise können über die Benutzerschnittstelle Soll-Einstellungen im Zusammenhang mit einem Ladevorgang für eine Batterie eines Elektrofahrzeugs eingestellt werden. Als nicht-limitierende Beispiele seien an dieser Stelle beispielsweise das Einstellen eines Ladezustandes (z.B. voll laden, zu einem Prozentanteil vollladen, für die Dauer einer vorbestimmten Zeit laden, für einen bestimmten Geldbetrag laden, oder dergleichen) genannt.

Die Steuerschaltung 10 ist in der Regel ein Mikroprozessor, der eine Vielzahl von Funktionen ausüben kann. Die Steuerschaltung 10 ist beispielsweise mit dem Stecker 7 und der optionalen Benutzerschnittstelle 17 verbunden. Zusätzlich kann die Steuerschaltung mit einer Anzeigevorrichtung (z.B. Anzeigevorrichtung 11 der Ladeboxeinheit 1 nach Fig. 1) verbunden sein.

Die Steuerschaltung 10 kann beispielsweise über Kommunikationsmittel verfügen, um beispielsweise mit einer zentralen Steuerung oder einem elektronischen Gerät (z.B. Smartphone, Tablet oder dergleichen) zu kommunizieren. Die Kommunikation kann in diesem Fall beispielsweise über eine Luftschnittstelle erfolgen. Somit kann die Steuerschaltung 10 beispielsweise über die Luftschnittstelle Vorgaben für das Einstellen eines Ladezustandes empfangen. Die Steuerschaltung 10 kann ferner beispielsweise einen Ladezustand einer mit der Ladeboxeinheit 1 oder mit einer Ladesäule 12 verbundenen Batterie eines Elektrofahrzeugs ermitteln. Abhängig von einem von der Steuerschaltung 10 bestimmten Vergleichsergebnis kann beispielsweise ein Ladevorgang gestartet werden. Ferner kann die Steuerschaltung beispielsweise Statusinformationen eines aktuellen Ladevorgangs ermitteln. Statusinformationen können beispielsweise Ist-Zustände einer angeschlossenen Batterie eines Elektrofahrzeugs umfassen. Diese ermittelten Statusinformationen können beispielsweise von einer Anzeigevorrichtung (z.B. Anzeigevorrichtung 11 nach Fig. 1) dargestellt werden. Zusätzlich oder alternativ können die ermittelten Statusinformationen an eine zentrale Steuerung und/oder an ein elektronisches Gerät übermittelt werden. Die Übermittlung kann beispielsweise über die Kommunikationsmittel erfolgen, z.B. über eine Luftschnittstelle.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

### Bezugszeichenliste

- 1: Ladeboxeinheit
- 2: Grundkörper
- 3: Rückseite
- 4: Gehäuse
- 5: Seitenfläche
- 6: Fixierelement
- 7: Stecker
- 8: Kontaktbuchsen
- 9: Anschluss für Ladekabel
- 10: Steuerschaltung
- 11: Anzeigevorrichtung
- 12: Ladesäule
- 13: Aufnahme
- 14: Dichtung
- 15: Buchse
- 16: Kontaktstifte
- 17: Benutzerschnittstelle
- 18: Einrastelement

## Patentansprüche

1. Ladesäule (12), wobei die Ladesäule (12) fest angeordnet ist und eine Ladeboxeinheit (1) umfasst, die Ladeboxeinheit (1) umfassend:
einen Grundkörper (5), und
eine Steckverbindung (7) zum Anschluss von einer oder mehreren Zuleitungen und/oder Ableitungen, wobei die Zuleitungen und/oder Ableitungen netzseitig vorhanden sind, wobei die Zuleitungen und/oder Ableitungen von der Ladesäule (12) umfasst sind,
wobei die Steckverbindung (7) an einer nach außen gerichteten Seite rückseitig des Grundkörpers (5) angeordnet ist, wobei die Steckverbindung (7) zur Verbindung mit einer korrespondierenden Steckverbindung (15) der Ladesäule (12) ausgebildet ist, und wobei die Ladeboxeinheit (1) in einer die korrespondierende Steckverbindung (15) aufweisenden Aufnahme (13) der Ladesäule (12) lösbar aufnehmbar ist,
wobei die zum Betrieb der Ladeboxeinheit (1) notwendige elektrische Leistung über die Steckverbindung (15) bereitgestellt wird, wobei eine Diebstahlschutzsicherung vorgesehen ist, so dass eine in die Aufnahme (13) der Ladesäule (12) aufgenommene Ladeboxeinheit (1) von außen nicht mehr lösbar ist.

2. Ladesäule (12) nach Anspruch 1, wobei die Steckverbindung (7) auf einer Rückseite des Grundkörpers (5) angeordnet ist, wobei die Steckverbindung (7) formschlüssig in die korrespondierende Steckverbindung (15) der Ladesäule (12) aufnehmbar ist.

3. Ladesäule (12) nach Anspruch 1 oder 2, wobei die Ladeboxeinheit (1) gegenüber der Ladesäule (12) abgedichtet ist, wenn die Ladeboxeinheit (1) in der Aufnahme (13) der Ladesäule (12) aufgenommen ist.

4. Ladesäule (12) nach einem der vorhergehenden Ansprüche, wobei die Ladeboxeinheit (1) ein Fixierelement (6) umfasst, so dass die Ladeboxeinheit (1) im aufgenommenen Zustand an der Ladesäule (12) fixiert ist.

5. Ladesäule (12) nach einem der vorhergehenden Ansprüche, wobei die Steckverbindung (7, 15) einen oder mehrere Kontakte (8) aufweist, wobei über mindestens einen der Kontakte (8) eine elektrische Leistung und über mindestens einen weiteren der Kontakte Informationen übertragbar sind.

6. Ladesäule (12) nach Anspruch 5, wobei über die ein oder mehreren Kontakte (8) die folgenden Parameter übertragbar sind:
(i) elektrische Wechselspannung;
(ii) elektrische Gleichspannung;
(iii) elektrische Niederspannung;
(iv) Daten;
(v) oder eine Kombination hiervon.

7. Ladesäule (12) nach Anspruch 5 oder Anspruch 6, wobei mindestens einer der Kontakte (8), über den eine elektrische Leistung übertragbar ist, eine oder mehrere der folgenden Zuleitungen umfasst:
(i) 1-phasige Wechselspannungszuleitung;
(ii) 3-phasige Wechselspannungszuleitung;
(iii) Gleichspannungszuleitung;
(iv) oder eine Kombination hiervon.

8. Ladesäule (12) nach einem der vorhergehenden Ansprüche, die Ladeboxeinheit umfassend einen Anschluss (9) zum Anschließen eines Ladekabels, wobei elektrische Leistung über die Steckverbindung (7, 15) an dem Anschluss (9) bereitstellbar ist.

9. Ladesäule (12) nach einem der vorhergehenden Ansprüche, wobei die Steckverbindung (7, 15) schwimmend gelagert ist, so dass bei Bewegungen in einem in der Ladesäule (12) aufgenommenen Zustand der Ladeboxeinheit (1) in der Ladesäule (12) die Steckverbindung (7) der Ladeboxeinheit (1) mit der Steckverbindung (15) der Ladesäule (12) verbunden ist.

10. Ladesäule (12) nach einem der vorhergehenden Ansprüche, wobei die Diebstahlschutzsicherung ein Einrastelement (18) aufweist, welches von einer Innenseite der Ladesäule (12) zugänglich ist und bei Betätigung ein Lösen der Ladeboxeinheit (1) aus der Ausnahme (13) der Ladesäule (12) heraus ermöglicht.

11. Ladesäule (12) nach einem der vorhergehenden Ansprüche, wobei die Ladeboxeinheit (1) im aufgenommenen Zustand mittels der Steckverbindung (7) an der Ladesäule (12) fixierbar ist.

## Claims

1. Charging column (12), wherein the charging column (12) is fixedly arranged and comprises a charging box unit (1), the charging box unit (1) comprising:
a main body (5), and
a plug-in connection (7) for connection of one or more supply lines and/or outgoing lines, wherein the supply lines and/or outgoing lines are present on the network side, wherein the supply lines and/or outgoing lines are comprised by the charging column (12),
wherein the plug-in connection (7) is arranged on an outwardly directed side at the rear of the main body (5),
wherein the plug-in connection (7) is configured to connect to a corresponding plug-in connection (15) of the charging column (12), and wherein the charging box unit (1) is releasably receivable in a receptacle (13) of the charging column (12), said receptacle having the corresponding plug-in connection (15),
wherein the electrical power required to operate the charging box unit (1) is provided via the plug-in connection (15), wherein provision is made of a theft prevention means, with the result that a charging box unit (1) received in the receptacle (13) of the charging column (12) is no longer releasable from the outside.

2. Charging column (12) according to Claim 1, wherein the plug-in connection (7) is arranged on a rear side of the main body (5), wherein the plug-in connection (7) is receivable in a form-fitting manner in the corresponding plug-in connection (15) of the charging column (12).

3. Charging column (12) according to Claim 1 or 2, wherein the charging box unit (1) is sealed off with respect to the charging column (12) when the charging box unit (1) is received in the receptacle (13) of the charging column (12).

4. Charging column (12) according to one of the preceding claims, wherein the charging box unit (1) comprises a fixing element (6), with the result that the charging box unit (1) is fixed to the charging column (12) in the received state.

5. Charging column (12) according to one of the preceding claims, wherein the plug-in connection (7, 15) has one or more contacts (8), wherein electrical power is transmissible via at least one of the contacts (8) and information is transmissible via at least one further one of the contacts.

6. Charging column (12) according to Claim 5, wherein the following parameters are transmissible via the one or more contacts (8):
(i) electrical AC voltage;
(ii) electrical DC voltage;
(iii) low electrical voltage;
(iv) data;
(v) or a combination thereof.

7. Charging column (12) according to Claim 5 or Claim 6, wherein at least one of the contacts (8) via which electrical power is transmissible comprises one or more of the following supply lines:
(i) 1-phase AC voltage supply line;
(ii) 3-phase AC voltage supply line;
(iii) DC voltage supply line;
(iv) or a combination thereof.

8. Charging column (12) according to one of the preceding claims, the charging box unit comprising a connection (9) for connection of a charging cable, wherein electrical power is able to be provided at the connection (9) via the plug-in connection (7, 15).

9. Charging column (12) according to one of the preceding claims, wherein the plug-in connection (7, 15) is mounted in a floating manner such that, in the case of movements in the charging column (12) in a state of the charging box unit (1) in which it is received in the charging column (12), the plug-in connection (7) of the charging box unit (1) is connected to the plug-in connection (15) of the charging column (12).

10. Charging column (12) according to one of the preceding claims, wherein the theft prevention means has a latching-in element (18) which is accessible from an inner side of the charging column (12) and which, upon actuation, allows the charging box unit (1) to be released from the receptacle (13) of the charging column (12).

11. Charging column (12) according to one of the preceding claims, wherein, in the received state, the charging box unit (1) is fixable to the charging column (12) by means of the plug-in connection (7).

## Revendications

1. Borne de recharge (12), la borne de recharge (12) étant agencée de manière fixe et comprenant une unité formant boîtier de recharge (1), l'unité formant boîtier de recharge (1) comprenant :
un corps de base (5), et
un connecteur (7) pour le raccordement d'un ou plusieurs câbles d'arrivée et/ou de sortie, les câbles d'arrivée et/ou de sortie étant présents côté réseau, les câbles d'arrivée et/ou de sortie faisant partie de la borne de recharge (12),
le connecteur (7) étant disposé sur une face dirigée vers l'extérieur à l'arrière du corps de base (5), le connecteur (7) étant conçu pour être relié à un connecteur correspondant (15) de la borne de recharge (12), et l'unité formant boîtier de recharge (1) pouvant être logée de manière amovible dans un logement (13) de la borne de recharge (12) comportant le connecteur correspondant (15),
la puissance électrique nécessaire au fonctionnement de l'unité formant boîtier de recharge (1) étant fournie par le connecteur (15), une sécurité antivol étant prévue, de sorte qu'une unité formant boîtier de recharge (1) logée dans le logement (13) de la borne de recharge (12) ne peut plus être retirée depuis l'extérieur.

2. Borne de recharge (12) selon la revendication 1, le connecteur (7) étant agencé sur une face arrière du corps de base (5), le connecteur (7) pouvant être logé par complémentarité de forme dans le connecteur correspondant (15) de la borne de recharge (12).

3. Borne de recharge (12) selon la revendication 1 ou 2, l'unité formant boîtier de recharge (1) étant étanche vis-à-vis de la borne de recharge (12) lorsque l'unité formant boîtier de recharge (1) est logée dans le logement (13) de la borne de recharge (12).

4. Borne de recharge (12) selon l'une quelconque des revendications précédentes, l'unité formant boîtier de recharge (1) comprenant un élément de fixation (6), de sorte que, dans l'état logé, l'unité formant boîtier de recharge (1) est fixée à la borne de recharge (12).

5. Borne de recharge (12) selon l'une quelconque des revendications précédentes, le connecteur (7, 15) comprenant un ou plusieurs contacts (8), une puissance électrique pouvant être transmise par l'intermédiaire d'au moins l'un des contacts (8) et des informations pouvant être transmises par l'intermédiaire d'au moins un autre des contacts.

6. Borne de recharge (12) selon la revendication 5, les paramètres suivants pouvant être transmis par l'intermédiaire du ou des contacts (8) :
(i) tension électrique alternative ;
(ii) tension électrique continue ;
(iii) basse tension électrique ;
(iv) données ;
(v) ou une combinaison de ceux-ci.

7. Borne de recharge (12) selon la revendication 5 ou la revendication 6, au moins l'un des contacts (8), par l'intermédiaire duquel une puissance électrique peut être transmise, comprenant un ou plusieurs des câbles d'arrivée suivants :
(i) un câble d'arrivée de tension alternative monophasée ;
(ii) un câble d'arrivée de tension alternative triphasée ;
(iii) un câble d'arrivée de tension continue ;
(iv) ou une combinaison de ceux-ci.

8. Borne de recharge (12) selon l'une quelconque des revendications précédentes, l'unité formant boîtier de recharge comprenant un raccord (9) pour le raccordement d'un câble de recharge, une puissance électrique pouvant être fournie par l'intermédiaire du connecteur (7, 15) au niveau du raccord (9).

9. Borne de recharge (12) selon l'une quelconque des revendications précédentes, le connecteur (7, 15) étant monté de manière flottante, de sorte que lors de mouvements dans un état logé dans la borne de recharge (12) de l'unité formant boîtier de recharge (1), dans la borne de recharge (12), le connecteur (7) de l'unité formant boîtier de recharge (1) est relié au connecteur (15) de la borne de recharge (12).

10. Borne de recharge (12) selon l'une quelconque des revendications précédentes, la sécurité antivol comprenant un élément d'encliquetage (18) qui est accessible depuis un côté intérieur de la borne de recharge (12) et qui, lors de son actionnement, permet une libération de l'unité formant boîtier de recharge (1) hors du logement (13) de la borne de recharge (12).

11. Borne de recharge (12) selon l'une quelconque des revendications précédentes, l'unité formant boîtier de recharge (1), dans l'état logé, pouvant être fixée à la borne de recharge (12) au moyen du connecteur (7).
